# FASCICULE DE BREVET EUROPEEN

(11) **EP 1 705 342 B1**
(45) Date de publication et mention de la délivrance du brevet: **21.09.2016**
(21) Numéro de dépôt: 06290362.0
(22) Date de dépôt: 02.03.2006
(51) Int. Cl.: F01D 9/04, F16L 41/02, F01D 9/06, F01D 11/00, F01D 5/08, F16L 27/04

(54) **Dispositif de liaison entre une enceinte de passage d'air de refroidissement et un aubage de distributeur dans une turbomachine**
Vorrichtung zur Verbindung eines Kühlluftplenums mit einer Statorschaufel in einer Turbomaschine
Connecting device between a cooling air plenum and a stator vane in a turbomachine

(30) Priorité: 23.03.2005 FR 0502880
(43) Date de publication de la demande: 27.09.2006
(73) Titulaire: SNECMA, 75015 Paris (FR)
(72) Inventeur: Dervaux, Alexandre, 75014 Paris (FR); Bermond, Sabine, 75003 Paris (FR)
(74) Mandataire: Ramey, Daniel

(56) Documents cités:
- EP-A- 0 040 268
- EP-A1- 0 919 700
- EP-A2- 1 209 324
- US-A- 3 275 294
- US-A- 5 407 237

## Description

La présente invention concerne un dispositif de liaison entre une enceinte de passage d'air de refroidissement, telle qu'une source d'air de refroidissement ou une enceinte de tranquillisation, et un aubage de distributeur dans une turbomachine, telle qu'un turboréacteur ou un turbopropulseur d'avion.

Les documents EP-A1-0 040 268, EP-A1-1 209 324, EP-A1-0 919 700 et US-A-3,275,294 décrivent des dispositifs de liaison de turbines à gaz.

Dans une turbomachine, les aubages de distributeur qui sont exposés à des températures importantes, notamment en aval de la chambre de combustion, comprennent des cavités internes de circulation d'air de refroidissement provenant d'une enceinte radialement externe, cet air pouvant être en partie diffusé dans la veine d'écoulement de gaz par des perçages formés sur les aubages, et en partie évacué dans une enceinte radialement interne.

Des moyens de liaison sont prévus entre ces enceintes et les aubages de distributeur pour permettre le passage de l'air de refroidissement avec un minimum de pertes et de fuites au niveau des interfaces, et comprennent des tubes métalliques dont les extrémités sont montées à étanchéité dans des orifices d'un carter et dans des orifices des aubages de distributeur.

En fonctionnement de la turbomachine, le carter et surtout les aubages de distributeur se dilatent thermiquement et sont soumis à des vibrations importantes, ce qui engendre des déplacements relatifs et des désalignements entre les orifices du carter et ceux des aubages.

Pour compenser ces déplacements relatifs et ces désalignements, on utilise des tubes de liaison dont les extrémités sont évasées de façon à permettre un léger rotulage des extrémités des tubes dans les orifices du carter et des aubages, ces extrémités étant montées serrées dans ces orifices pour garantir une étanchéité suffisante de l'ensemble.

Cette solution n'est toutefois pas satisfaisante dans la mesure où le montage serré des extrémités des tubes limite leurs possibilités de rotulage et occasionne des zones d'usure importante par frottement sur les surfaces internes des orifices du carter et des aubages, qui peuvent entraîner des fuites au niveau de ces extrémités voire même la perte ou la ruine des tubes de liaison.

L'invention a notamment pour but d'apporter une solution simple, économique et efficace à ce problème.

Elle propose à cet effet un dispositif de liaison selon la revendication 1 entre une enceinte de passage d'air de refroidissement et un aubage de distributeur dans une turbomachine telle qu'un turboréacteur d'avion, ce dispositif comprenant des tubes métalliques dont les extrémités sont montées à étanchéité dans des orifices d'un carter de l'enceinte et de l'aubage de distributeur, caractérisé en ce qu'une partie médiane de chaque tube est formée par un soufflet métallique dont les extrémités sont fixées à des bagues engagées à étanchéité dans les orifices du carter et de l'aubage, respectivement.

Le soufflet associé à chaque tube permet d'absorber par déformation élastique les décalages et les désalignements entre les orifices du carter et de l'aubage résultant du fonctionnement de la turbomachine, tout en assurant la continuité de la liaison de fluide entre l'enceinte précitée et l'aubage de distributeur et en évitant l'usure des extrémités des tubes et une mise en contrainte de ces tubes.

L'extrémité du tube engagée dans l'orifice de l'aubage de distributeur est à surface extérieure tronconique sollicitée en appui sur une surface tronconique conjuguée de l'orifice de l'aubage de distributeur par une précontrainte élastique dudit soufflet.

L'autre extrémité du tube est par exemple cylindrique et appliquée à pression sur une rondelle d'étanchéité montée dans une gorge annulaire de la surface cylindrique interne de l'orifice du carter de l'enceinte.

L'invention concerne également un turbomachine, telle qu'un turboréacteur ou un turbopropulseur d'avion, caractérisée en ce qu'elle comprend au moins un dispositif tel que décrit ci-dessus.

L'invention sera mieux comprise et d'autres caractéristiques et avantages de l'invention apparaîtront à la lecture de la description suivante faite à titre d'exemple non limitatif en référence aux dessins annexés dans lesquels :
- la figure 1 est une demi-vue schématique partielle en coupe axiale d'un aubage de distributeur relié à deux enceintes de passage d'air de refroidissement par des dispositifs de liaison selon la technique antérieure ;
- la figure 2 est une vue schématique partielle en coupe axiale d'un dispositif de liaison selon la technique antérieure ;
- la figure 3 est une vue schématique partielle en coupe axiale du dispositif de liaison selon l'invention.

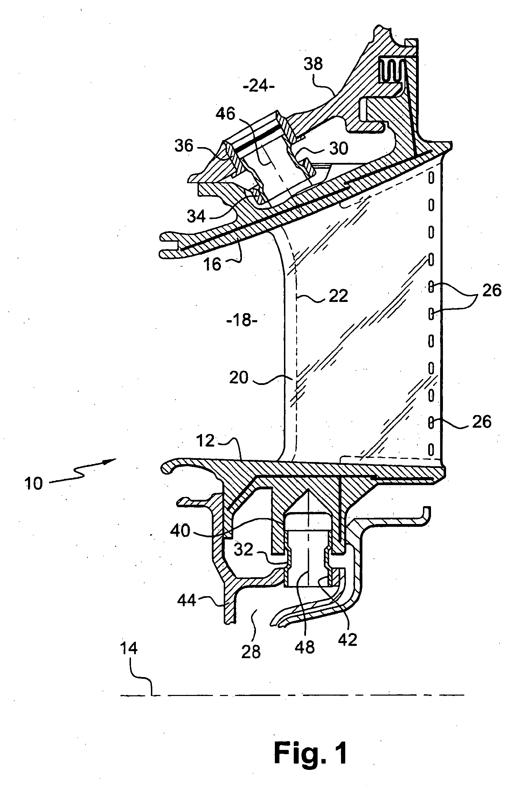

La figure 1 est une demi-vue schématique partielle en coupe axiale d'un aubage de distributeur 10 dans une turbomachine, à paroi annulaire radialement interne 12 d'axe 14 et à paroi tronconique radialement externe 16 d'axe 14, inclinée en amont vers l'axe 14, délimitant entre elles un espace annulaire 18 d'écoulement des gaz provenant d'une chambre de combustion (non représentée) de la turbomachine, et entre lesquelles s'étendent radialement des pales 20.

Chaque pale 20 comprend une cavité interne 22 de circulation d'air de refroidissement provenant d'une enceinte d'alimentation 24, radialement externe à la paroi 16 de l'aubage, l'air étant en partie diffusé dans l'espace annulaire 18 par des fentes 26 des pales 20 et en partie évacué dans une enceinte 28 radialement interne à la paroi 12 de l'aubage.

Les cavités 22 des pales sont reliées aux enceintes externe 24 et interne 28 au moyen de dispositifs de liaison comprenant des tubes métalliques 30, 32, respectivement.

Les tubes 30 de passage d'air entre l'enceinte externe 24 et les cavités 22 des pales, ont leurs extrémités engagées à étanchéité dans des douilles 34, 36 fixées dans des orifices formés dans la paroi 16 de l'aubage et dans des orifices formés dans un carter 38 de l'enceinte 24, respectivement.

Les tubes 32 de passage d'air entre les cavités 22 des pales et l'enceinte interne 28, ont leurs extrémités engagées à étanchéité dans des orifices 40, 42 de la paroi 12 de l'aubage et d'un rebord annulaire d'un carter 44 de l'enceinte 28, respectivement.

En fonctionnement de la turbomachine, la dilatation thermique de l'aubage de distributeur 10 et la vibration du moteur de la turbomachine provoquent, au niveau de chaque tube 30,32, des déplacements relatifs en translation et en rotation entre l'aubage 10 et les carters des enceintes 24, 28.

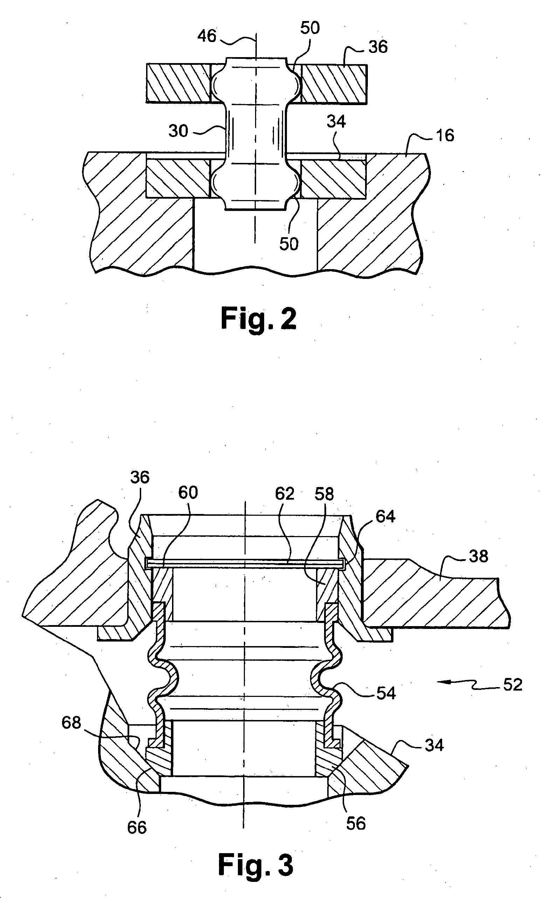

Dans la technique actuelle représentée schématiquement en figure 2, chaque tube 30 d'un dispositif de liaison comprend des extrémités 50 évasées ou présentant une surface externe en segment de sphère qui sont engagées dans les douilles fixes 34, 36 et qui peuvent librement coulisser dans celles-ci et compenser les déplacements relatifs précités.

Pour garantir une étanchéité suffisante entre le tube 30 et les douilles fixes 34, 36, ses extrémités 50 sont montées serrées dans ces douilles fixes, ce qui limite fortement leur possibilité de coulissement et de rotulage et occasionne des usures importantes par frottement, qui peuvent entraîner des fuites voire la mise hors d'usage du tube.

En figure 3, on a représenté en coupe axiale un dispositif selon l'invention, dans lequel chaque tube 52 comprend un soufflet métallique 54 formant la partie médiane du tube et aux extrémités duquel sont fixées des bagues cylindriques 56, 58 engagées à étanchéité dans les orifices des douilles fixes 34, 36, respectivement.

Dans l'exemple représenté, l'extrémité libre 60 de la bague externe 58 est cylindrique et appliquée à pression sur une rondelle d'étanchéité 62 montée dans une gorge annulaire 64 de la surface cylindrique interne de la douille fixe 36, et l'extrémité libre de la bague 56 comprend une surface extérieure tronconique 66 en appui sur une surface tronconique 68 conjuguée de la douille fixe 34.

En variante, les bagues 56 et 58 peuvent avoir des extrémités libres cylindriques appliquées respectivement sur une surface annulaire correspondante de la douille 34 et sur la rondelle d'étanchéité 62.

Une précontrainte élastique du soufflet 54 permet de solliciter la surface tronconique de la bague 56 en appui sur la surface 68 de la douille fixe 34, cette précontrainte élastique étant déterminée avec la raideur du soufflet 54 pour garantir une étanchéité suffisante de l'ensemble.

En fonctionnement de la turbomachine, tous les déplacements relatifs en translation et en rotation entre le carter 38 et l'aubage sont compensés par déformation élastique des soufflets des tubes 52.

Ce dispositif selon l'invention peut également être monté entre l'aubage 10 et le carter 44 de l'enceinte interne 28.

Les soufflets des tubes sont typiquement réalisés en alliage du type inconel ou en acier inoxydable.

Le dispositif selon l'invention est capable d'absorber des déplacements relativement importants entre le carter de l'enceinte et l'aubage, tout en assurant la continuité des liaisons de fluide entre le carter et l'aubage et en réduisant à un minimum les risques d'usure des tubes de liaison et les contraintes qui leur sont appliquées.

## Revendications

1. Dispositif de liaison dans une turbomachine, comprenant une enceinte (24, 28) de passage d'air de refroidissement, un aubage de distributeur (10), et des tubes (52) dont une partie médiane est formée par un soufflet (54) et dont les extrémités sont montées à étanchéité dans des orifices d'un carter (38, 44) de l'enceinte et de l'aubage de distributeur (10), **caractérisé en ce que** chaque tube (52) est métallique et ses extrémités sont fixées à des bagues (56, 58) engagées à étanchéité dans les orifices du carter et de l'aubage, respectivement, et **en ce que** la bague (56) engagée dans l'orifice de l'aubage est à surface extérieure tronconique (66) et est sollicitée en appui sur une surface tronconique conjuguée (68) de l'orifice de l'aubage par une précontrainte élastique du soufflet (54).

2. Dispositif selon la revendication 1, **caractérisé en ce que** la bague (58) engagée dans l'orifice du carter est cylindrique et appliquée à pression, par une précontrainte élastique du soufflet (54), sur une rondelle d'étanchéité (62) montée dans une gorge annulaire (64) de la surface cylindrique interne de l'orifice du carter (38, 44).

3. Turbomachine, telle qu'un turboréacteur ou un turbopropulseur d'avion, **caractérisée en ce qu'**elle comprend au moins un dispositif selon la revendication 1 ou 2.

## Patentansprüche

1. Verbindungsvorrichtung in einer Turbomaschine, die ein Kühlluftplenum (24, 28), eine Statorschaufel (10) und Rohre (52) umfasst, von denen ein mittlerer Teil durch ein Balg (54) gebildet wird und dessen Enden dicht in die Öffnungen eines Gehäuses (38, 44) des Plenums und der Statorschaufel (10) montiert werden, **dadurch gekennzeichnet, dass** jedes Rohr (52) aus Metall besteht und an seinen Ende Ringe (65, 58) befestigt sind, die dicht in die Öffnungen des Plenums und der Statorschaufel eingreifen, und dadurch dass der in die Öffnung der Statorschaufel eingreifende Ring (56) an der Außenseite kegelstumpfförmig ist (66) und auf einer angrenzenden kegelstumpfförmigen Fläche (68) der Schaufelöffnung durch eine elastische Vorspannung des Balgs (54) eine Auflagebeanspruchung erfährt.

2. Vorrichtung nach Anspruch 1, **dadurch gekennzeichnet, dass** der in die Öffnung des Gehäuses eingreifende Ring (58) zylindrisch ist und durch eine elastische Vorspannung des Balgs (54) an eine Dichtungsscheibe (62) gedrückt wird, die in eine Ringnut (64) der inneren zylindrischen Fläche der Öffnung von Gehäuse (38, 44) montiert ist.

3. Turbomaschine wie zum Beispiel ein Turbostrahltriebwerk oder ein Turbopropellertriebwerk eines Flugzeugs, **dadurch gekennzeichnet, dass** es mindestens eine Vorrichtung nach Anspruch 1 oder 2 enthält.

## Claims

1. A linking device in a turbine engine, comprising an enclosure (24, 28) for passing cooling air, a stator nozzle (10) and tubes (52) having a middle portion, formed by a bellows (54), and having ends mounted in leaktight manner in orifices of a casing (38, 44) of the enclosure and in orifices of the stator nozzle (10), **characterized in that** each tube (52) is a metal tube and whose ends are secured to rings (56, 58) engaged in leaktight manner in the orifices of the casing and of the nozzle, respectively, and **in that** the ring (56) that is engaged in the orifice of the nozzle has a frustoconical outside surface (66) and is urged to press against a complementary frustoconical surface (68) of the orifice in the nozzle by resiliently prestressing the bellows (54).

2. A device according to claim 1, **characterized in that** the ring (58) that is engaged in the orifice of the casing is cylindrical and is pressed by resiliently prestressing the bellows (54) against a sealing washer (62) mounted in an annular groove (64) in the inner cylindrical surface of the orifice in the casing (38, 44).

3. A turbomachine such as an airplane turbojet or turboprop, **characterized in that** it includes at least one device according to claim 1 or claim 2.
